# EUROPEAN PATENT SPECIFICATION

(11) **EP 1 266 561 B1**
(45) Date of publication and mention of the grant of the patent: **04.05.2011**
(21) Application number: 02012435.0
(22) Date of filing: 10.06.2002
(51) Int. Cl.: A01D 89/00, A01F 15/10

(54) **Oscillation compensator for laterally oscillating transverse pick-up unit of pick-up baler for gathering hay, straw or the like**
Oszillationsausgleichsvorrichtung für die seitliche Oszillationen einer Ballenpressenaufnahmevorrichtung um Heu, Stroh, oder dergleichen aufzunehmen
Compensateur d'oscillations pour un dispositif ramasseur transversal oscillant latéralement d'une presse à balles pour le ramassage du foin, paille ou similaire

(30) Priority: 15.06.2001 IT BO20010377
(43) Date of publication of application: 18.12.2002
(73) Proprietor: Gallignani S.p.A., 48026 Russi (RA) (IT)
(72) Inventor: Ravaglia, Paolo, 48020 Glorie Di Bagnacavallo (Ravenna) (IT)
(74) Representative: Modiano, Micaela Nadia

(56) References cited:
- BE-A- 1 010 940
- US-A- 3 798 885
- US-A- 4 187 666
- US-A- 4 527 381

## Description

The present invention relates to an oscillation compensator for a laterally oscillating transverse pick-up unit of a pick-up baler for gathering hay, straw or the like.

Oscillating transverse pick-up units for rotary presses are known which comprise a frame with two side walls that rotatably support a transverse spindle along which a plurality of sets of substantially radial sprung teeth are distributed: the side walls are articulated to the rear of the base of the pick-up baler, have respective tire-fitted wheels for rolling on the ground rotatably mounted thereon, and are connected to the pick-up baler by a pair of hydraulic cylinders for lifting and lowering that are capable of producing oscillations of the pick-up unit about a horizontal axis that is perpendicular to the direction of advancement on the ground of the pick-up baler in order to move the pick-up unit from a working position to a transfer position.

Rather wide pick-up units are currently becoming widespread which have considerable advantages from the point of view of the production of extremely regular cylindrical bales and of the optimum collection of the product in wide swaths that allow better ventilation, a smaller number of passes, reduced treading and shorter drying and gathering times: however, the considerable width has drawbacks in the presence of less than perfectly flat ground.

If the ground is inclined laterally with respect to the direction of advancement on the ground (presence of differences in level, rises or hollows in the ground), one of the two lateral wheels in fact rests on the ground, while the other one is raised from the ground; in this situation, the product is gathered entirely on the side where the wheel rests on the ground, while on the side of the wheel that does not rest on the ground the spindles are excessively spaced from the ground and gather less effectively.

Known oscillating pick-up units absorb oscillations by means of large springs that operate independently of each other on the two sides of the machine, but it has been observed that beyond certain differences in level the springs no longer operate effectively, since they have to elongate beyond their optimum elongation.

US-A- 4 527 381 discloses a lateral flotation mechanism for combine harvesters. The combine includes a wheeled base harvesting unit 1a fitted with a feeder housing 2 that supports the cutting element or header 3. The header 3 is rigidly attached to a cradle frame 4 which is free to rotate on a longitudinal axis or pivot pin 5 attached to the feeding housing 2. Rigidly mounted on the feeder housing 2, at opposite ends relative to the pivot pin 5, are two compression-adjustable springs 6 that freely engage the cradle frame 4. Lateral flotation of the header 3 (supported by the cradle frame4) about the pivot pin 5 axis causes one spring 6 to disengage from the cradle frame 4 while the other spring 6 is compressed between the cradle frame 4 and the feeding housing 2. Also provided is a header lift cylinder 19 attached between the feeding housing 2 and the base harvesting unit 1a.

The aim of the present invention is to obviate the above mentioned drawbacks and meet the mentioned requirements, by providing an oscillation compensator for a laterally oscillating transverse pick-up unit of a pick-up baler for gathering hay, straw or the like that is capable of adapting to the transverse discontinuities of the ground and is capable of producing cylindrical bales having an optimum shape and consistency even in the presence of terrain having a very uneven surface: in practice, the invention allows oscillations about an axis that is parallel to the advancement direction and to an axis that is perpendicular to such direction.

Within this aim, an object of the present invention is to provide a structure that is simple, relatively easy to provide in practice, safe in use, effective in operation, and has a relatively low cost.

In accordance with the invention, there is provided an oscillation compensator for a laterally oscillating transverse pick-up unit of a pick-up baler for gathering hay, straw or the like, as defined in the appended claims.

Further characteristics and advantages of the invention will become better apparent from the following detailed description of a preferred but not exclusive embodiment of an oscillation compensator for a laterally oscillating transverse pick-up unit of a pick-up baler for gathering hay, straw or the like according to the invention, illustrated only by way of non-limitative example in the accompanying drawings, wherein:
Figure 1 is a side view of an oscillation compensator for a laterally oscillating transverse pick-up unit of a pick-up baler for gathering hay, straw or the like, according to the present invention, in the active configuration on level ground;
Figure 2 is a side view of the compensator in the active configuration at a hollow on one or both sides of the pick-up unit;
Figure 3 is a side view of the compensator according to the invention in the inactive or transfer configuration, raised by means of hydraulic cylinders;
Figure 4 is a side view of the compensator in the active configuration at a rise on one or both sides of the pick-up unit;
Figure 5 is an exploded perspective view of the compensator according to the invention;

With reference to the figures, the reference numeral 1 generally designates an oscillation compensator for a laterally oscillating transverse pick-up unit 2 of a pick-up baler for gathering hay, straw or the like according to the invention: in the figures, the known components of the rotary presses and pick-up units have been shown in finer lines.

The pick-up unit 2 is advantageously constituted, in a known manner, by a transversely arranged frame that is provided with two side walls 3a and 3b; respective tire-fitted wheels 4a and 4b for resting on the ground are mounted so that they can rotate freely on the two sides of the pick-up unit 2.

A spindle is mounted and rotatably actuated in a known manner in the pick-up unit and is provided with sets of radial teeth D for gathering hay the like and is connected to a chain that is closed in a loop, shown schematically and very widely spaced in the figures; two substantially square supporting side members 5a and 5b are rigidly coupled to the two sides of the pick-up baler, and respective pivots 6 are fixed to the side members, the pivots being rotatable on bearings and being rigidly coupled to the pick-up unit. In the figure, the right pivot supports the roller 6c and the left pivot supports the roller 6d.

The side members 5a and 5b have, along their upper edges, two substantially square seats 5c, 5d, in which two respective free rollers 6c, 6d are centered; the corresponding pivots of the free rollers are mutually aligned and are rigidly coupled to the side walls of the pick-up baler: this coupling allows oscillations on a substantially vertical plane of the pick-up unit by means of the fixed slots 5c and 5d: advantageously, in order to withstand the transverse thrusts, one of the free rollers 6c, 6d has two shoulders 6e on both sides.

At the front and centrally with respect to the pick-up baler there is a rigidly coupled pivot 8, to which an oscillating transverse frame 9 is articulated about a substantially horizontal longitudinal axis A; the pick-up unit is associated with the two sides of the frame, and elastic means 10, designed to reduce the load on the wheels of the pick-up unit, are mounted on the two sides between the frame and the side walls of the pick-up unit 2.

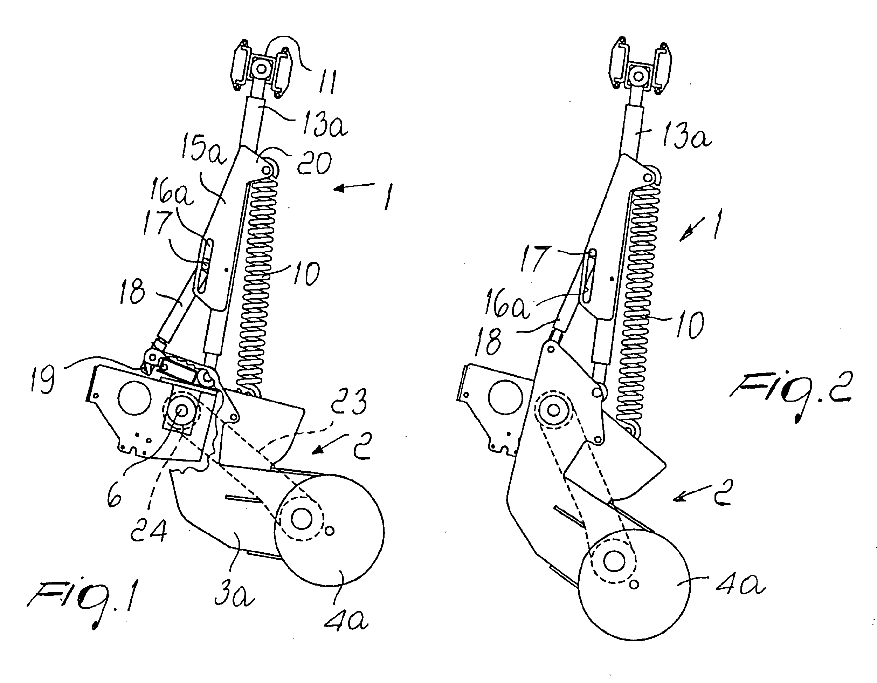

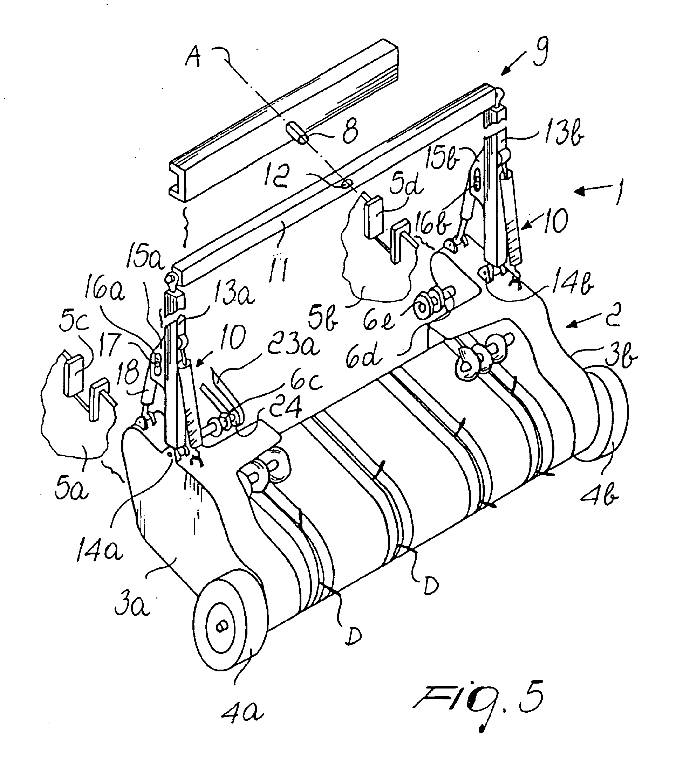

In a first embodiment shown in Figures 1 to 5, the frame 9 comprises a transverse bar 11, which runs along the entire width of the pick-up baler and has, in an intermediate position, a hole 12 for articulation to the pivot 8, which in the particular case is located in the upper region of the pick-up baler; the upper ends of two substantially vertical arms 13a, 13b are articulated to the bar 11 on the two sides; the lower ends of the arms are articulated to respective horizontal pivots 14a and 14b for articulation to the upper edge of the side walls 3a and 3b of the pick-up unit.

Two trapezoidal plates 15a and 15b are fixed to the rear of the two vertical arms 13a and 13b and have respective slots 16a and 16b that are elongated longitudinally with respect to the arms; the eye 17 of a fluid-actuated cylinder 18 is mounted so that it can move along the slots and has, at its other end, an eye that is articulated by means of an elongated slot 19 to a pivot that is rigidly coupled to the upper region of the pick-up unit: the elongation of the cylinder 18 is meant to raise from the ground the pick-up unit as a whole for transfers during which it is not required to work: once raised, the pick-up unit locks automatically, resting on corresponding fixed lateral stroke limiters.

Each one of the elastic means 10 is constituted by a helical traction spring, whose upper and lower ends are respectively engaged with a lug 20 provided with a hole, which is rigidly coupled to the trapezoidal plates 15 and to the side walls 3 of the pick-up unit.

The weight that bears on the wheels can be adjusted by tensioning the spring on the arms. It is noted that during the oscillation about the upper pivot, the weight on the wheels remains substantially constant, because the spring follows the vertical movement of the arm, being anchored above it.

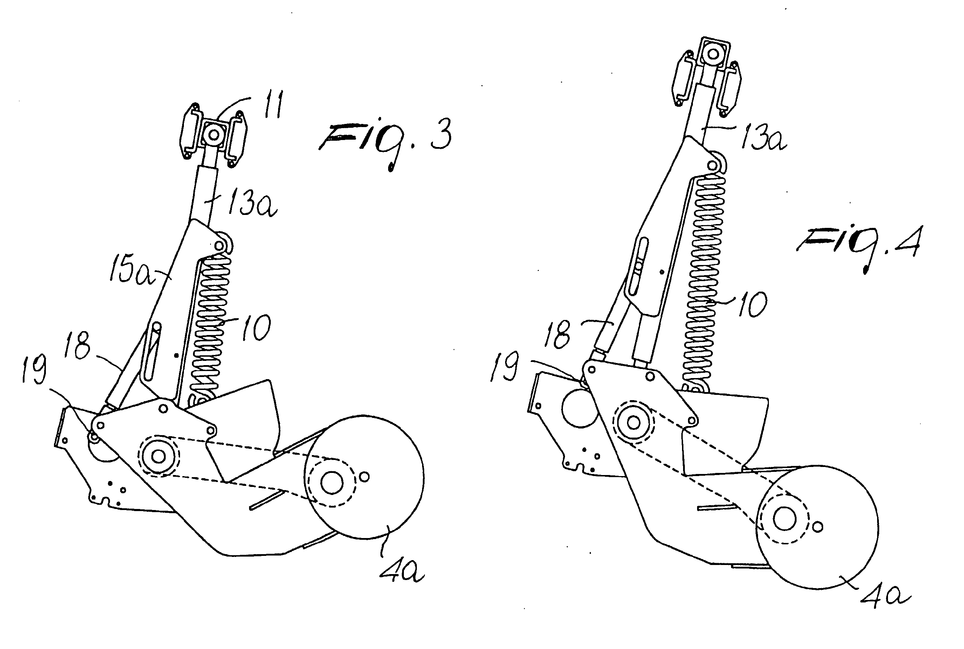

In case of a considerable inclination between one side of the pick-up unit and the other, i.e., when one wheel enters a hollow (Figure 2) and the other wheel correspondingly climbs onto a rise of equal but opposite vertical extension (Figure 4), and only in this case, the frame, by oscillating, causes the descent of one wheel simultaneously with the rise of the other wheel without the intervention of the springs.

If instead one wheel enters a hollow (Figure 2) and the other one does not (Figure 1), one has a partial rotation of the frame about the axis A and a compensatory rotation about the other axis formed by the pivots 6, so that both wheels remain in contact with the ground.

The chain 23 transmits motion to the pivot 6, which turns the spindle by means of the chain 23a: attention is called to the fact that the transmission pinion 24 of the chain 23 is mounted on the same shaft that supports the free rollers 6c, so that the thrust of the chain is ideal, since it discharges the traction force directly onto the frame by means of the roller 6c.

As mentioned, in the case of laterally inclined terrain (one wheel rises and the other one descends), the frame, by tilting, compensates for the rise of one side of the pick-up unit with the descent of the other side. The springs, by elongating as necessary, reduce the load on the brackets and pivots: the possibility of transverse oscillation is clearly shown in Figures 2 and 4, where it can be seen that one wheel 4a and 4b can move down or up independently of the other in order to follow the contour of the terrain; moreover, Figure 3 shows that the elongation of the cylinder 18 allows to lift the pick-up unit for transfers.

It has thus been shown that the invention achieves the proposed aim and object.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An oscillation compensator (1) for a laterally oscillating transverse pick-up unit (2) of a pick-up baler for gathering hay, straw or the like, wherein at the front, centrally with respect to the pick-up baler, an oscillating transverse frame (9) is articulated about a substantially horizontal longitudinal axis (A), **characterized by** the pick-up unit (2) being associated with the two sides of said frame (9) by means of sliding elements that allow vertical relative movements and that comprise two substantially vertical arms (13a,13b) provided with respective slots (16a,16b) in which the eye (17) of a fluid-actuated cylinder (18) is slidably mounted, and in that elastic means (10), suitable to reduce the load on the wheels of the pick-up unit, are fitted on the two sides between said frame (9) and the side walls (3a,3b) of said pick-up unit (2), the traction force thereof being substantially independent of the oscillation of the pick-up unit (2).

2. The compensator (1) according to claim 1, **characterized in that** said frame (9) comprises a transverse bar (11) that runs along the entire width of the pick-up baler and is articulated, at an intermediate position, to an upper region of the pick-up baler, the upper ends of said arms (13a,13b) being articulated to the two sides of said bar (11), the lower ends of said arms (13a,13b) being articulated to respective horizontal pivots (14a,14b) for articulation to said pick-up unit (2).

3. The compensator (1) according to one or more of the preceding claims, **characterized in that** respective mutually opposite pivots (6) are fixed to side members (5a,5b) that are rigidly coupled to the two sides of the pick-up baler and that form two substantially square seats (5c,5d) for sliding and rotation with respect to said pivots (6), which allow oscillations on a substantially vertical plane.

4. The compensator (1) according to claim 3, **characterized in that** said pivots (6) are horizontal, are mutually aligned, and **in that** at least one pivot has, at free ends thereof, respective shoulders (6e) rigidly coupled thereto, said shoulders (6e) being suitable to avoid extraction from the respective seat (5d).

## Patentansprüche

1. Oszillations-Kompensator (1) für eine seitlich oszillierende querliegende Aufnahmeeinheit (2) einer Aufnahmepresse zum Sammeln von Heu, Stroh oder Ähnlichem, wobei an der Front, zentral bezogen auf die Aufnahmepresse, ein oszillierender querliegender Rahmen (9) gelenkig um eine im Wesentlichen horizontale Längsachse (A) angelenkt ist, **dadurch gekennzeichnet, dass** die Aufnahmeeinheit (2) mit den zwei Seiten des Rahmens (9) mittels verschieblicher Elemente verbunden ist, welche vertikale relative Bewegungen erlauben und welche zwei im Wesentlichen vertikale Arme (13a, 13b) aufweisen, welche mit entsprechenden Schlitzen (16a, 16b) ausgestattet sind, in welchen das Auge (17) eines fluid-betätigten Zylinders (18) verschieblich montiert ist, und dadurch, dass elastische Mittel (10), welche dazu geeignet sind die Last auf den Rädern der Aufnahmeeinheit zu reduzieren, auf den zwei Seiten zwischen dem Rahmen (9) und den Seitenwänden (3a, 3b) der Aufnahmeeinheit (2) befestigt sind, wobei die Zugkraft dieser im Wesentlichen unabhängig von der Oszillation der Aufnahmeeinheit (2) ist.

2. Kompensator (1) nach Anspruch 1, **dadurch gekennzeichnet, dass** der Rahmen (9) eine querliegende Stange (11) aufweist, die entlang der gesamten Breite der Aufnahmepresse verläuft und an einer oberen Region der Aufnahmepresse an einer mittleren Position, angelenkt ist, wobei die oberen Enden der Arme (13a, 13b) an den zwei Seiten des Stabs (11) angelenkt sind, und wobei die unteren Enden der Arme (13a, 13b) an entsprechenden horizontalen Zapfen (14a, 14b), für Gelenkigkeit zu der Aufnahmeeinheit (2), angelenkt sind.

3. Kompensator (1) nach einem oder mehreren der vorstehenden Ansprüche, **dadurch gekennzeichnet, dass** entsprechende gegenüberliegende Zapfen (6) mit Seitenelementen (5a, 5b) verbunden sind, welche starr mit den zwei Seiten der Aufnahmepresse gekoppelt sind und welche zwei im Wesentlichen rechteckige Sitze (5c, 5d) zum Verschieben und Rotieren bezogen auf die Zapfen (6) formen, welche Oszillationen auf einer im Wesentlichen vertikalen Ebene erlauben.

4. Kompensator (1) nach Anspruch 3, **dadurch gekennzeichnet, dass** die Zapfen (6) horizontal sind gegenseitig in Linie ausgerichtet sind, und dadurch, dass wenigstens ein Zapfen, an freien Enden von diesem, entsprechende Schultern (6e) hat, welche starr zu diesem gekoppelt sind, wobei die Schultern (6e) dazu geeignet sind ein Entfernen von den entsprechenden Sitzen (5d) zu verhindern.

## Revendications

1. Compensateur d'oscillations (1) pour un dispositif ramasseur transversal (2) oscillant latéralement d'une ramasseuse-presse pour la collecte du foin, de la paille ou similaire, dans lequel, à l'avant, centralement par rapport à la ramasseuse-presse, un châssis transversal oscillant (9) est articulé autour d'un axe longitudinal (A) sensiblement horizontal, **caractérisé par** le dispositif ramasseur (2) qui est associé à deux côtés dudit châssis (9) au moyen d'éléments coulissants qui permettent des mouvements verticaux relatifs et qui comprennent deux bras sensiblement verticaux (13a, 13b) prévus avec des fentes (16a, 16b) respectives dans lesquelles l'ouïe d'aspiration (17) d'un cylindre hydraulique (18) est montée de manière coulissante, et en ce que des moyens élastiques (10), appropriés pour réduire la charge sur les roues du dispositif ramasseur, sont montés sur les deux côtés entre ledit châssis (9) et les parois latérales (3a, 3b) dudit dispositif ramasseur (2), sa force de traction étant sensiblement indépendante de l'oscillation du dispositif ramasseur (2).

2. Compensateur (1) selon la revendication 1, **caractérisé en ce que** ledit châssis (9) comprend une barre transversale (11) qui s'étend le long de toute la largeur de ramasseuse-presse et est articulée, dans une position intermédiaire, par rapport à une région supérieure de la ramasseuse-presse , les extrémités supérieures desdits bras (13a, 13b) étant articulées par rapport aux deux côtés de ladite barre (11), les extrémités inférieures desdits bras (13a, 13b) étant articulées par rapport aux pivots horizontaux (14a, 14b) respectifs pour l'articulation par rapport audit dispositif ramasseur (2).

3. Compensateur (1) selon une ou plusieurs des revendications précédentes, **caractérisé en ce que** des pivots mutuellement opposés (6) respectifs sont fixés sur des éléments latéraux (5a, 5b) qui sont rigidement couplés aux deux côtés de la ramasseuse-presse et qui forment deux sièges sensiblement carrés (5c, 5d) pour le coulissement et la rotation par rapport auxdits pivots (6), qui permettent des oscillations sur un plan sensiblement vertical.

4. Compensateur (1) selon la revendication 3, **caractérisé en ce que** lesdits pivots (6) sont horizontaux, sont mutuellement alignés, et **en ce qu'**au moins un pivot a, au niveau de ses extrémités libres, des épaulements (6e) respectifs rigidement couplés à ce dernier, lesdits épaulements (6e) étant appropriés pour éviter l'extraction du siège (5d) respectif.
